# FASCICULE DE BREVET EUROPEEN

(11) **EP 0 584 016 B1**
(45) Date de publication et mention de la délivrance du brevet: **17.07.1996**
(21) Numéro de dépôt: 93402062.9
(22) Date de dépôt: 16.08.1993
(51) Int. Cl.: B62D 21/08, B62D 21/18, B62D 53/06

(54) **Plateau de véhicule**
Ladeplattform eines Fahrzeuges
Loading platform of a vehicle

(30) Priorité: 17.08.1992 FR 9210080
(43) Date de publication de la demande: 23.02.1994
(73) Titulaire: SOLLAC, F-92800 Puteaux (FR)
(72) Inventeur: Datry, Olivier, Résidence le Cap Rousset, Bâtimen, F-13260 Carry Le Rouet (FR); Patou, Pascal, F-13510 Eguilles (FR)
(74) Mandataire: Moncheny, Michel

(56) Documents cités:
- EP-A- 0 260 200
- DE-A- 2 124 547
- DE-C- 914 824
- US-A- 3 254 914

## Description

La présente invention concerne un plateau de véhicule.

Elle s'applique en particulier aux véhicules routiers pour le transport de marchandises, comportant une semi-remorque à plateau accrochée à un tracteur.

De façon classique, un plateau de semi-remorque est porté par un train roulant à deux ou trois essieux.

Le plateau comporte deux longerons reliés entre eux par un grand nombre de traverses, le tout formant un bâti portant un plancher en bois.

Les plateaux de semi-remorques à bâtis classiques comportent de nombreux inconvénients.

La masse des plateaux à bâtis classiques est relativement élevée. Bien qu'il soit possible de fabriquer un bâti avec des longerons de section variable afin de réduire leur poids, les semelles des longerons doivent être relativement épaisses pour assurer la rigidité des plateaux.

Les plateaux à bâtis classiques présentent une faible rigidité en torsion autour de leur axe longitudinal susceptible de détériorer la tenue de route de l'ensemble formé par le tracteur et la semi-remorque.

En cas de collision, les plateaux à bâtis classiques présentent de nombreux contours agressifs et dangereux pour les automobilistes, les motards ou les piétons.

Les plateaux à bâtis classiques présentent des caractéristiques aérodynamiques peu performantes détériorées notamment par la fixation sur les plateaux de béquilles, de coffres à palettes et de supports de roues de secours.

Des plateaux à bâtis classiques, comportant des longerons et des traverses, sont également utilisés pour la fabrication d'autobus, et présentent des inconvénients similaires à ceux mentionnés ci-dessus dans le cas des plateaux pour semi-remorques.

EP-A-914 824 décrivent chacun un plateau de véhicule destiné à être porté par au moins un train roulant du véhicule.

Un plateau de véhicule ayant les caractéristiques du préambule de la revendication 1 est décrit dans le document DE-C-914 824.

La présente invention a pour but de remédier aux inconvénients exposés ci-dessus et de proposer un plateau de véhicule léger, rigide en torsion et en flexion, ayant une forme esthétique, présentant des caractéristiques aérodynamiques satisfaisantes et ayant un coût de fabrication peu élevé.

A cet effet, l'invention a pour objet un plateau de véhicule destiné à être porté par au moins un train roulant du véhicule, caractérisé en ce qu'il comporte un bâti alvéolaire assurant notamment la rigidité du plateau, ce bâti comportant une armature alvéolaire comprenant des plaques en tôle métallique entrecroisées dont les faces sont parallèles à l'épaisseur du plateau, formant des âmes longitudinales et des âmes transversales de manière que chaque plaque forme une âme à elle seule, l'armature étant recouverte d'une enveloppe métallique fixée sur cette armature.

Suivant d'autres caractéristiques de l'invention:
- l'enveloppe comporte une partie inférieure formant coque, fixée sur le dessous et les bords latéraux de l'armature, et une partie supérieure formant plancher fixée sur le dessus de l'armature;
- le plancher comporte au moins une dalle comprenant une armature métallique alvéolaire et une enveloppe en tôle métallique fixée sur cette armature;
- l'armature alvéolaire de la dalle est en aluminium;
- les dalles du plancher sont fixées par collage sur des bords tombés formés sur les âmes de l'armature du bâti et sur des profilés métalliques intérieurs au bâti fixés le long des parois latérales de la coque;
- la face libre du plancher est recouverte d'une couche de revêtement anti-dérapante comprenant un polymère;
- le plateau comporte des profilés métalliques extérieurs au bâti fixés le long des bords latéraux du bâti, ces profilés extérieurs ayant des dimensions et des formes variables en fonction des dimensions du plateau requises, notamment de la largeur du plateau requise, et du type de carrosserie destiné à être monté sur le plateau;
- les profilés extérieurs sont fixés sur le bâti par collage;
- le plateau comporte des ouvertures latérales communiquant avec des alvéoles du bâti formant caissons de rangement.

L'invention a également pour objet une semi-remorque comportant un plateau tel que défini ci-dessus.

L'invention sera mieux comprise à l'aide de la description qui va suivre, donnée uniquement à titre d'exemple et faite en se référant aux dessins annexés, sur lesquels :
- la Fig.1 est une vue schématique en élévation d'un ensemble de véhicule routier comportant un tracteur et une semi-remorque munie d'un plateau selon l'invention;
- la Fig.2 est une vue en perspective, avec des arrachements, du plateau de la semi-remorque de la Fig.1;
- la Fig.3 est une vue en perspective de l'armature du plateau de la Fig.2;
- la Fig.4 est une vue en perspective du dessous du plateau de la Fig.2; et
- la Fig.5 est une vue en coupe, à grande échelle, selon la ligne 5-5 de la Fig.2.

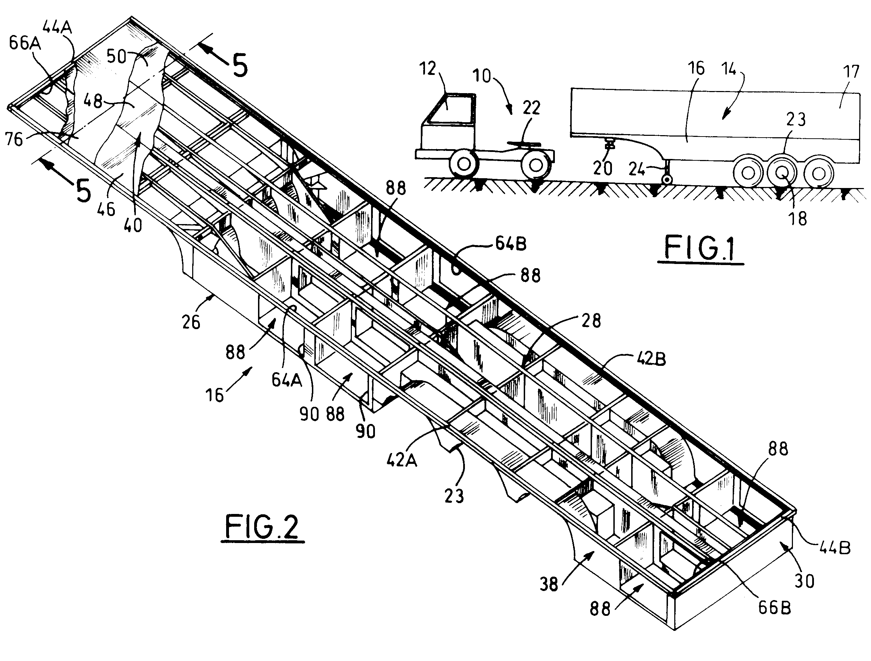

On voit sur la Fig.1, un ensemble de véhicule routier, désigné par la référence générale 10, comportant un tracteur 12 et une semi-remorque 14.

La semi-remorque 14 comporte un plateau 16 selon l'invention portant une superstructure de carrosserie 17 et formant support pour des charges transportées dans cette semi-remorque.

Le plateau 16 est porté, à son extrémité arrière, à droite en considérant la Fig.1, par un train roulant 18 de type connu à trois essieux.

L'extrémité avant de la semi-remorque, à gauche en considérant la Fig.1, comporte un pivot d'attelage 20 destiné à coopérer avec une sellette d'attelage 22 portée par le tracteur 12.

L'extrémité avant du plateau 16, d'épaisseur réduite par rapport au reste du plateau, est appelée habituellement col de cygne.

L'extrémité arrière du plateau 16 comporte des logements 23 dans lesquels sont disposées les roues du train roulant 18.

Sur la Fig.1, le tracteur 12 et la semi-remorque 14 sont représentés en position décrochée. Une paire de béquilles 24 fixées à proximité de l'extrémité avant de la semi-remorque 14 empêchent son basculement vers l'avant en position décrochée.

Dans l'exemple décrit, le plateau 16 a une largeur de 2,48 m, une longueur de 13,55 m et une épaisseur de 85 cm.

On décrira maintenant plus en détail le plateau 16 selon l'invention en regard des Fig.2 à 5.

On voit sur la Fig.2 que le plateau 16 comporte un bâti 26 alvéolaire assurant notamment la rigidité de ce plateau.

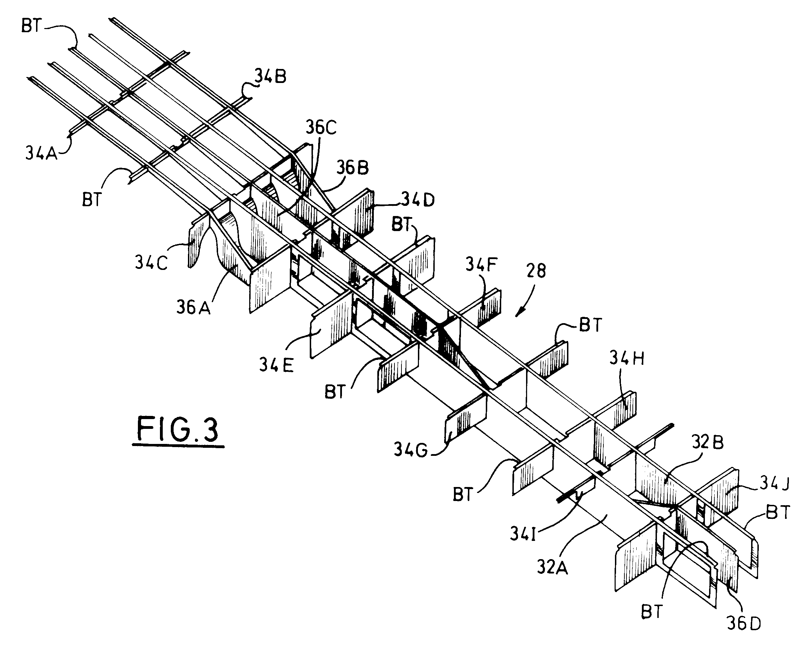

Le plateau 26 comporte une armature alvéolaire 28, montrée plus en détail à la Fig.3, recouverte d'une enveloppe externe 30 de rigidification fixée sur cette armature 28.

On voit sur la Fig.3 que l'armature 28 comporte deux âmes longitudinales principales 32A, 32B, s'étendant à peu près sur toute la longueur du plateau, et dix âmes transversales 34A - 34J s'étendant à peu près sur toute la largeur du plateau.

L'armature 28 comporte de plus des âmes longitudinales secondaires 36A - 36D de longueur inférieure à la longueur du plateau.

Deux âmes longidutinales secondaires 36A, 36B s'étendent respectivement de part et d'autre des âmes longitudinales principales 32A, 32B, de l'extrémité avant de l'armature 28, à gauche en considérant la Fig.3, jusqu'à l'âme transversale 34D. Une âme longitudinale secondaire 36C s'étend entre des âmes longitudinales principales 32A, 32B, de l'extrémité avant de l'armature 28 jusqu'à l'âme transversale 34G.

Une âme longitudinale 36D s'étend de l'extrémité arrière de l'armature 28, à droite en considérant la Fig.3, jusqu'à l'âme transversale 34I.

Les âmes transversales et longitudinales de l'armature 28 sont constituées de plaques en tôle métallique, de préférence en acier, de dimensions et d'épaisseurs adaptées à la forme des différentes parties du plateau 16 et à la grandeur des contraintes mécaniques auxquelles est soumis le plateau 16. Les faces des plaques sont parallèles à l'épaisseur du plateau 16.

Dans l'exemple décrit, les âmes longitudinales principales 32A, 32B, ont une longueur de 13,47 m, une hauteur variant de 100 mm à 800 mm et une épaisseur comprise entre 3 et 5 mm, et les âmes transversales 34 - 34J, ont une longueur de 2,42 m, une hauteur comprise entre 800 et 100 mm et une épaisseur comprise entre 2,8 et 3 mm.

Les plaques formant les âmes de l'armature 28 sont entrecroisées et soudées entre elles par des moyens connus, par exemple par des cordons de soudure continus ou bien par des soudures par points.

Les âmes de l'armature 28 comportent des bords repliés, appelés habituellement bords tombés, destinés à la fixation de l'enveloppe 30 du bâti 26, comme cela sera décrit ultérieurement.

Pour des raisons de clarté, on a représenté sur les figures 2 et 3 uniquement les bords tombés BT supérieurs des âmes de l'armature 28.

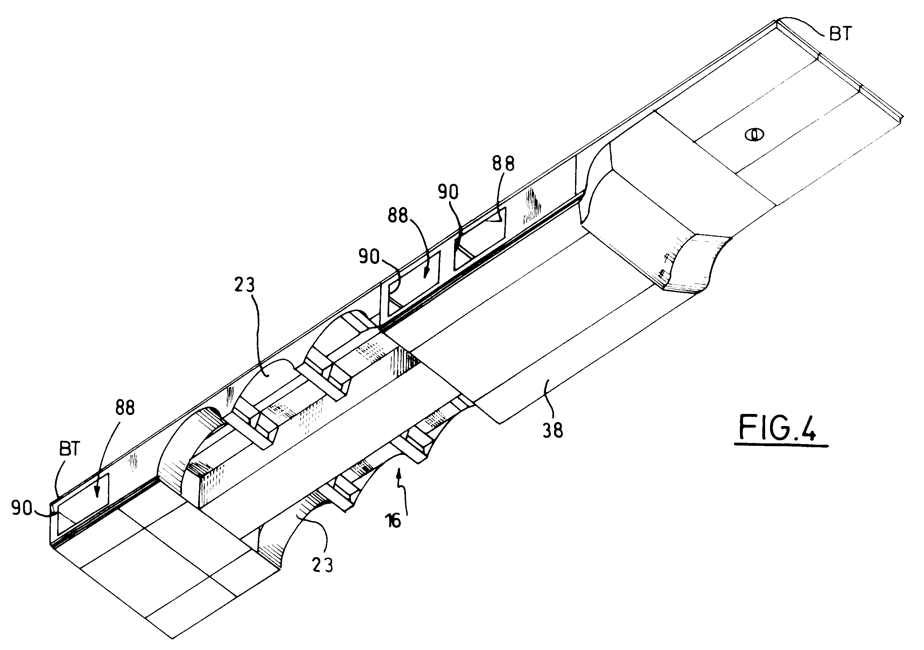

L'enveloppe 30 de l'armature 28 comporte une partie inférieure formant coque 38 montrée plus en détail à la Fig.4, et une partie supérieure formant plancher 40.

La coque 38 délimite le dessous et les bords latéraux du plateau 16. Les parois de la coque 38 sont constituées par des tôles métalliques planes ou embouties, de préférence en acier, assemblées entre elles par soudage.

Dans l'exemple décrit, les parois de la coque 38 ont une épaisseur variant de 1,8 à 5mm selon les grandeurs des contraintes mécaniques auxquelles la coque est susceptible d'être soumise.

La coque 38 est fixée sur les bords tombés correspondants des âmes longitudinales et transversales de l'armature 28 par des soudures de type connu, par exemple par des soudures par points ou par des soudures à la molette.

On voit sur la Fig.4 que les bords libres de la coque 38 sont repliés vers l'extérieur de la coque de façon à former des bords tombés BT.

Les parois latérales de la coque 38, dépassent en hauteur l'armature 28 de façon que les bords libres de la coque 38 soient sensiblement alignés avec la face supérieure du plancher 40.

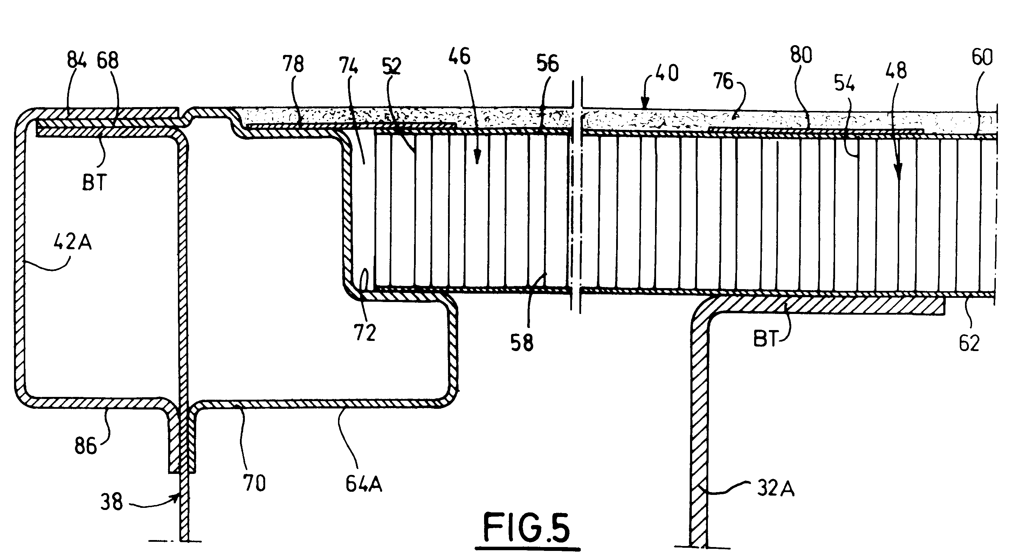

Des profilés métalliques longitudinaux 42A, 42B et transversaux 44A, 44B sont fixés sur les bords libres de la coque 38 et forment des bordures saillantes à l'extérieur de cette coque 38. Pour des raisons de clarté, ces bordures n'ont pas été représentées à la Fig.4 et elles seront décrites plus en détail ultérieurement en regard de la Fig.5.

Le plancher 40 recouvre le dessus de l'armature 28 et comporte six dalles 46 - 50 dont trois seulement sont représentées sur la Fig.2.

Les dalles 46 - 50 ont une forme générale sensiblement prismatique, leur plus grande dimension étant parallèle à l'axe longitudinal du plateau 16.

Le plancher 40 comporte trois rangées longitudinales de dalles 46 - 50 juxtaposées, chaque rangée comportant deux dalles.

Les dalles 46 - 50 ont des largeurs et des longueurs adaptées à la position dans le bâti des âmes de l'armature 28 sur lesquelles elles sont fixées.

On a représenté sur la Fig.5, des dalles 46, 48 du plancher 40 plus en détail.

Chaque dalle 46, 48 comprend une armature métallique alvéolaire 52, 54 de type connu, par exemple en acier mais de préférence en aluminium, disposée en sandwich entre deux plaques métalliques 56 - 62, de préférence en acier, placées respectivement sur le dessus et le dessous des dalles.
Les plaques 56 - 62 forment une enveloppe de rigidification des dalles.

Les armatures 52, 54 comprennent des alvéoles de forme générale tubulaire, d'axes parallèles à l'épaisseur des dalles.

Dans l'exemple décrit, les dalles 46 - 50 ont une épaisseur d'environ 40 mm, les armatures 50, 54 ont une épaisseur d'environ 38 mm et les plaques 56 - 62 recouvrant le dessus et le dessous des armatures, ont une épaisseur d'environ 1 mm.

Comme on peut le voir sur les Fig.2 et 5, les dalles 46 - 50 sont fixées sur les bords tombés BT correspondants des âmes qu'elles recouvrent et sur des profilés métalliques longitudinaux 64A, 64B et transversaux 66A, 66B, de préférence en acier, fixés le long des bords libres de la coque 38, à l'intérieur de celle-ci.

Les profilés intérieurs 64A, 64B, 66A, 66B ont tous une section sensiblement identique qui est montrée plus en détail à la Fig.5 sur laquelle on a représenté, le profilé longitudinal 64A.

Le profilé 64A a une section en forme générale de U.

Les ailes 68, 70 du profilé 64A sont fixées par des soudures, de préférence par des soudures par points, l'une sur le bord tombé BT de la coque 38 et l'autre sur la paroi latérale de la coque 38.

Le profilé 64A comporte un épaulement 72, sensiblement parallèle au plancher 40, formant appui pour des dalles 46 de ce plancher. De façon classique, l'épaulement 72 est appelé bord de rive.

Sur la Fig.5, on voit que la dalle 46 est fixée en particulier sur le bord de rive 72 et un bord tombé BT de l'âme longitudinale principale 32A.

La dalle 48 est juxtaposée à la dalle 46 en étant fixée sur le même bord tombé BT de l'âme longitudinale principale 32A.

Comme on peut le voir sur la Fig.5, un jeu 74, facilitant le montage du plancher 40, est ménagé entre les profilés intérieurs 64A et le plancher 40.

L'ensemble des dalles du plancher 40 est fixé sur le plateau 16 avec des moyens similaires à ceux que l'on vient de décrire en regard de la Fig.5.

De préférence, les dalles du plancher sont fixées sur les bords tombés de l'armature et sur les bords de rive du bâti par collage, par exemple au moyen d'une colle biépoxy.

La surface libre du plancher 40 et recouverte d'une couche 76 de revêtement anti-dérapante comprenant un polymère, de préférence du polyuréthane.

Cette couche 76 absorbe les chocs subis par le plancher 40 au cours du chargement du plateau et évite la formation de bosses sur la surface libre du plancher.

Comme on peut le voir sur la Fig.5, les orifices formés dans la face libre du plancher par le jeu 74 et les jonctions des dalles 46, 48 juxtaposées sont obturés par des bandes métalliques 78, 80 de façon à éviter l'écoulement du polymère à travers le plancher avant son durcissement.

On décrira maintenant les profilés du plateau formant les bordures extérieures.

Les bordures longitudinales 42A, 42B et transversales 44A, 44B ont toutes une section de forme sensiblement identique qui est montrée plus en détail à la Fig.5 sur laquelle on a représenté la bordure extérieure longitudinale 42A.

La bordure 42A a une section en forme générale de U et comporte des ailes 84, 86 fixées sur la coque 38 par collage. Une première aile 84 est collée sur l'aile 68 du profilé intérieur 64A de façon à recouvrir le bord tombé BT de la coque 38. La seconde aile 86 est collée sur la paroi latérale de la coque 38.

La forme du profilé 42A permet d'adapter le plateau 16 à des normes différentes concernant les dimensions du plateau.

En particulier, les normes concernant la largeur d'un plateau de semi-remorque ne sont pas identiques dans tous les pays.

Selon la norme que l'on souhaite satisfaire, on fixe sur le plateau des bordures extérieures de dimensions adaptées. De même, la forme et les dimensions des bordures extérieures peuvent être adaptées au type de carrosserie destiné à être monté sur le plateau.

Le bâti alvéolaire 26 permet d'intégrer dans le plateau 16 des caissons de rangement.

Comme on peut le voir sur les figures 2 et 4, le plateau 16 comporte six alvéoles 88 formant caissons de rangement accessibles de l'extérieur par des ouvertures 90 ménagées sur les parois latérales de la coque 38.

Les caissons 88 permettent notamment le rangement de deux roues de secours, la première étant destinée au tracteur 12 et la seconde à la semi-remorque 14.

Les caissons permettent également de loger des palettes utilisées comme supports des charges transportées dans la semi-remorque.

L'invention ne se limite pas au mode de réalisation décrit.

Le plateau peut comporter un bâti alvéolaire comprenant une armature constituée d'un nombre varié d'âmes longitudinales et d'âmes transversales.

L'utilisation du plateau selon l'invention ne se limite pas à la fabrication de semi-remorques. Le plateau selon l'invention peut être utilisé par exemple pour la fabrication d'autobus. Dans ce cas, il est porté par un train roulant avant et un train roulant arrière.

L'invention comporte de nombreux avantages.

Le bâti alvéolaire permet d'améliorer la rigidité en torsion et la rigidité en flexion du plateau. Ainsi, la tenue de route de l'ensemble tracteur-semi-remorque est améliorée.

Le bâti alvéolaire constitue une structure anti-encastrement en cas de collision de la semi-remorque avec un autre véhicule.

L'enveloppe recouvrant l'armature du plateau optimise les caractéristiques aérodynamiques du plateau et permet d'économiser l'énergie nécessaire à la traction d'une semi-remorque.

Le bâti alvéolaire permet de ménager dans l'épaisseur du plateau des caissons de rangement et de loger différents éléments tels que des réservoirs à air pour le système de freinage et pour les suspensions de la semi-remorque, ceci sans influence sur les caractéristiques aérodynamiques de la semi-remorque.

Des béquilles équipant habituellement les semi-remorques peuvent être montées déplaçables sur le plateau entre une position escamotée à l'intérieur des alvéoles du bâti et une position d'utilisation faisant saillie sous le plateau.

Le plateau selon l'invention permet de réduire notablement le poids de la semi-remorque par rapport à une semi-remorque munie d'un plateau à bâtis classiques. Selon les dimensions du plateau de la semi-remorque, l'invention permet de réaliser un gain de poids qui peut atteindre voire dépasser 1200 Kg.

Le plateau selon l'invention permet de fabriquer une semi-remorque dont le plancher est situé à un niveau plus bas par rapport au sol que dans le cas d'une semi-remorque à plateau classique, et par conséquent, à hauteurs totales identiques des semi-remorques, permet de transporter un volume de marchandise plus important.

Le revêtement en polymère du plancher du plateau permet d'augmenter l'adhérence des palettes de marchandises sur le plancher par rapport aux planchers classiques en bois.

## Revendications

1. Plateau de véhicule destiné à être porté par au moins un train roulant (18) du véhicule, caractérisé en ce qu'il comporte un bâti (26) alvéolaire assurant notamment la rigidité du plateau, ce bâti (26) comportant une armature (28) alvéolaire comprenant des plaques en tôle métallique entrecroisées dont les faces sont parallèles à l'épaisseur du plateau, formant des âmes longitudinales (32A, 32B, 36A - 36D) et des âmes transversales (34A - 34J) de manière que chaque plaque forme une âme à elle seule, l'armature (28) étant recouverte d'une enveloppe métallique (30) fixée sur cette armature.

2. Plateau de véhicule selon la revendication 1, caractérisé en ce que l'enveloppe (30) comporte une partie inférieure formant coque (38), fixée sur le dessous et les bords latéraux de l'armature (28), et une partie supérieure formant plancher (40) fixée sur le dessus de l'armature (28).

3. Plateau de véhicule selon la revendication 2, caractérisé en ce que le plancher (40) comporte au moins une dalle (46 - 50) comprenant une armature métallique (52, 54) alvéolaire et une enveloppe (56 - 62) en tôle métallique fixée sur cette armature.

4. Plateau de véhicule selon la revendication 3, caractérisé en ce que l'armature (52, 54) alvéolaire de la dalle (46 - 50) est en aluminium.

5. Plateau de véhicule selon l'une quelconque des revendications 2 à 4, caractérisé en ce que les dalles (46 - 50) du plancher (40) sont fixées par collage sur des bords tombés (BT) formés sur les âmes (32A, 32B, 36A - 36D, 34A - 34J) de l'armature (28) du bâti et sur des profilés métalliques (64A, 64B, 66A, 66B) intérieurs au bâti fixés le long des parois latérales de la coque (38).

6. Plateau de véhicule selon l'une quelconque des revendications 2 à 5, caractérisé en ce que la face libre du plancher (40) est recouverte d'une couche (76) de revêtement anti-dérapante comprenant un polymère.

7. Plateau de véhicule selon l'une quelconque des revendications 1 à 6, caractérisé en ce qu'il comporte des profilés métalliques (42A, 42B, 44A, 44B) extérieurs au bâti fixés le long des bords latéraux du bâti (26), ces profilés extérieurs ayant des dimensions et des formes variables en fonction des dimensions du plateau requises, notamment de la largeur du plateau requise, et du type de carrosserie destiné à être monté sur le plateau.

8. Plateau de véhicule selon la revendication 7, caractérisé en ce que les profilés extérieurs (42A, 42B, 44A, 44B) sont fixés sur le bâti (26) par collage.

9. Plateau de véhicule selon l'une quelconque des revendications 1 à 8, caractérisé en ce qu'il comporte des ouvertures latérales (90) communiquant avec des alvéoles du bâti (26) formant caissons de rangement (88).

10. Semi-remorque pour véhicule routier, caractérisée en ce qu'elle comporte un plateau selon l'une quelconque des revendications précédentes.

## Claims

1. Vehicle bed intended to be carried by at least one wheel train (18) of the vehicle, characterised in that it comprises a cellular structure (26) which ensures particularly the rigidity of the bed, this structure (26) having a cellular framework (28) comprising intersecting sheet metal plates, the faces of which are parallel to the thickness of the bed, forming longitudinal (32A, 32B, 36A - 36D) and transverse webs (34A - 34J), in such a way that each plate forms a web by itself, the framework (28) being covered by a metal casing (30) fixed to this framework.

2. Vehicle bed according to claim 1, characterised in that the casing (30) comprises a lower part forming a shell (38) which is fixed to the underside and the side edges of the framework (28), and an upper part forming a floor (40) fixed to the top of the framework (28).

3. Vehicle bed according to claim 2, characterised in that the floor (40) comprises at least one block (46 - 50) having a cellular metal framework (52, 54) and a sheet metal casing (56 - 62) fixed to this framework.

4. Vehicle bed according to claim 3, characterised in that the cellular framework (52, 54) of the block (46 - 50) is made of aluminium.

5. Vehicle bed according to any one of claims 2 to 4, characterised in that the blocks (46 - 50) of the floor (40) are fixed by adhesive bonding to dropped edges (BT) formed on the webs (32A, 32B, 36A - 36D, 34A - 34J) of the framework (28) of the structure and to metal sections (64A, 64B, 66A, 66B) inside the structure which are fixed along the side walls of the shell (38).

6. Vehicle bed according to any one of claims 2 to 5, characterised in that the exposed surface of the floor (40) is covered with a layer (76) of a non-slip coating comprising a polymer.

7. Vehicle bed according to any one of claims 1 to 6, characterised in that it comprises metal sections (42A, 42B, 44A, 44B) outside the structure which are fixed along the side edges of the structure (26), these outer sections being of variable dimensions and shapes depending on the desired dimensions of the bed, particularly the desired width of the bed, and the type of bodywork intended to be mounted on the bed.

8. Vehicle bed according to claim 7, characterised in that the outer sections (42A, 42B, 44A, 44B) are fixed to the structure (26) by adhesive bonding.

9. Vehicle bed according to any one of claims 1 to 8, characterised in that it comprises side openings (90) communicating with cells of the structure (26) which form storage boxes or crates (88).

10. Trailer for a road vehicle, characterised in that it comprises a bed according to any one of the preceding claims.

## Patentansprüche

1. Sattelauflieger für ein Fahrzeug, der dazu bestimmt ist, durch mindestens ein Fahrgestell (18) des Fahrzeugs getragen zu werden,
dadurch gekennzeichnet, daß er einen zellenförmigen Rahmen (26) aufweist, der insbesondere die Steifigkeit des Sattelaufliegers gewährleistet, wobei dieser Rahmen (26) eine zellenförmige Bewehrung (28) aufweist, die gekreuzte Platten aus Metallblech aufweist, deren Stirnseiten parallel zur Dicke des Sattelaufliegers verlaufen, wobei Längsstege (32A, 32B, 36A - 36D) und Querstege (34A - 34J) derart gebildet sind, daß jede Platte einen Steg für sich bildet, wobei die Bewehrung (28) mit einer Metallverkleidung (30) bedeckt ist, die auf dieser Bewehrung befestigt wird.

2. Sattelauflieger für ein Fahrzeug nach Anspruch 1, dadurch gekennzeichnet, daß die Verkleidung (30) einen unteren Teil aufweist, der einen Rumpf (38) bildet, der auf der Oberseite und den Seitenkanten der Bewehrung (28) befestigt ist, und einen oberen Teil, der einen Boden (40) bildet, der auf der Oberseite der Bewehrung (28) befestigt ist.

3. Sattelauflieger für ein Fahrzeug nach Anspruch 2, dadurch gekennzeichnet, daß der Boden (40) mindestens eine Bodenplatte (46 - 50) aufweist, die eine zellenförmige Metallbewehrung (52, 54) und eine Verkleidung (56 - 62) aus Metallblech, die auf dieser Bewehrung angebracht ist, aufweist.

4. Sattelauflieger für ein Fahrzeug nach Anspruch 3, dadurch gekennzeichnet, daß die zellenförmige Bewehrung (52, 54) der Bodenplatte (46 - 50) aus Aluminium besteht.

5. Sattelauflieger für ein Fahrzeug nach einem der Ansprüche 2 bis 4,
dadurch gekennzeichnet, daß die Bodenplatten (46 - 50) des Bodens (40) durch Kleben auf eingeschlagenen Kanten (BT) befestigt sind, die auf den Stegen (32A, 32B, 36A - 36D, 34A - 34J) der Bewehrung (28) des Rahmens und auf inneren Metallprofilen (64A, 64B, 66A, 66B) im Rahmen gebildet sind, die längs der Seitenwände des Rumpfes (38) befestigt sind.

6. Sattelauflieger für ein Fahrzeug nach einem der Ansprüche 2 bis 5,
dadurch gekennzeichnet, daß die freie Stirnseite des Bodens (40) mit einer Schicht (76) eines rutschfesten Überzugs, der ein Polymer aufweist, bedeckt ist.

7. Sattelauflieger für ein Fahrzeug nach einem der Ansprüche 1 bis 6,
dadurch gekennzeichnet, daß er äußere Metallprofile (42A, 42B, 44A, 44B) im Rahmen aufweist, die längs der Seitenkanten des Rahmens (26) befestigt sind, wobei diese äußeren Profile Abmessungen und Formen haben, die als Funktion der geforderten Abmessungen des Sattelaufliegers, insbesondere der geforderten Breite des Sattelaufliegers und des Karosserietyps variabel sind, der dazu bestimmt ist, auf dem Sattelauflieger montiert zu werden.

8. Sattelauflieger für ein Fahrzeug nach Anspruch 7, dadurch gekennzeichnet, daß die äußeren Profile (42A, 42B, 44A, 44B) auf dem Rahmen (26) durch Kleben befestigt sind.

9. Sattelauflieger für ein Fahrzeug nach einem der Ansprüche 1 bis 8,
dadurch gekennzeichnet, daß er seitliche Öffnungen (90) aufweist, die mit Zellen des Rahmens (26) kommunizieren, der Unterbringungskästen (88) bildet.

10. Sattelanhänger für ein Straßenfahrzeug,
dadurch gekennzeichnet, daß er einen Sattelauflieger nach einem der vorangehenden Ansprüche aufweist.
